# EUROPÄISCHE PATENTANMELDUNG

(11) **EP 1 182 075 A1**
(43) Veröffentlichungstag der Anmeldung: **27.02.2002**
(21) Anmeldenummer: 01120141.5
(22) Anmeldetag: 21.08.2001
(51) Int. Cl.: B60K 17/10

(54) **Hydrostatischer Fahrantrieb**

(30) Priorität: 22.08.2000 DE 10041059
(71) Anmelder: STILL GMBH, D-22113 Hamburg (DE)
(72) Erfinder: Fromme, Georg, Dr., 22145 Hamburg (DE); Mittmann, Hans-Georg, 21465 Wentorf (DE)
(74) Vertreter: Lang, Michael (DE)

(57) **Zusammenfassung**

Ein Fahrantrieb verfügt über mindestens einen hydraulischen Motor (2) und eine Mehrzahl von Endabtrieben (4, 6). Der hydraulische Motor (2) weist einen relativ zu einem Stator (3) drehbar gelagerten Rotor (5) auf. Erfindungsgemäß ist für eine einfache Bauweise des Fahrantriebs der Stator (3) in einem feststehenden Gehäuse (1) zum Rotor (5) entgegengesetzt drehbar gelagert, steht der Rotor (5) und der Stator (3) jeweils mit einem Endabtrieb (4; 6) in Antriebsverbindung und ist ein Umkehrgetriebe (8) vorgesehen, das zwischen dem Rotor (5) und dem zugeordneten Endabtrieb (6) oder zwischen dem Stator (3) und dem zugeordneten Endabtrieb (4) angeordnet ist. Der Motor (2) ist bevorzugt als hydrostatischer Kolbenmotor ausgebildet. Zwischen dem Rotor (5) und dem zugeordneten Endabtrieb (6) und zwischen dem Stator (3) und dem zugeordneten Endabtrieb (4) kann jeweils ein Untersetzungsgetriebe angeordnet sein. Das Umkehrgetriebe (8) ist bevorzugt in eines der Untersetzungsgetriebe integriert. Der Motor (2), das Umkehrgetriebe (8) und ggf. die Untersetzungsgetriebe können baulich zu einer Fahrzeug-Antriebsachse zusammengefasst sein, die insbesondere zum Einsatz in Flurförderzeugen vorgesehen ist.

## Beschreibung

Die Erfindung betrifft einen Fahrantrieb mit mindestens einem hydraulischen Motor, der einen relativ zu einem Stator drehbar gelagerten Rotor aufweist, und mit einer Mehrzahl von Endabtrieben.

Derartige Fahrantriebe werden in Arbeitsmaschinen, wie Baumaschinen oder Gabelstapler, verwendet. Dabei gibt es Ausführungen, bei denen ein einzelner Hydromotor unter Zwischenschaltung eines Differenzialgetriebes zwei Achsen (Zentralantrieb) oder zwei Räder einer Achse (Achsantrieb) antreibt. Durch das Differenzialgetriebe werden unterschiedlicher Raddrehzahlen, wie sie z. B. bei Kurvenfahrt auftreten, ausgeglichen.

Gemäß einer anderen Ausführung ist jedem Antriebsrad einer Antriebsachse ein eigener Motor zugeordnet. Ein Drehzahlausgleich für die Kurvenfahrt (Differenzialwirkung) kann dabei durch eine hydraulische Parallelschaltung der beiden Hydromotoren erzielt werden.

Der vorliegenden Erfindung liegt die Aufgabe zu Grunde, einen Fahrantrieb der eingangs genannten Art zur Verfügung zu stellen, der einfacher aufgebaut ist.

Diese Aufgabe wird erfindungsgemäß dadurch gelöst, dass der Stator in einem feststehenden Gehäuse zum Rotor entgegengesetzt drehbar gelagert ist, der Rotor und der Stator jeweils mit einem Endabtrieb in Antriebsverbindung stehen und ein Umkehrgetriebe vorgesehen ist, das zwischen dem Rotor und dem zugeordneten Endabtrieb oder zwischen dem Stator und dem zugeordneten Endabtrieb angeordnet ist.

Durch Abstützung des auf den Stator einwirkenden Reaktionsmomentes auf einem der Endabtriebe wird eine Differenzialwirkung erzielt, ohne ein separates Differenzialgetriebe vorsehen zu müssen. Mit Hilfe des Umkehrgetriebes wird dabei für beide Endabtriebe dieselbe Drehrichtung erzeugt. Es ist somit möglich, mit einem einzigen hydraulischen Motor ohne nachgeschaltetes Differenzialgetriebe zwei Endabtriebe, z. B. Radwellen anzutreiben.

Der Motor ist mit Vorteil als hydrostatischer Kolbenmotor ausgebildet, beispielsweise als Axial- oder Radialkolbenmotor.

Bei Verwendung eines Radialkolbenmotors sind keine weiteren Maßnahmen erforderlich, da solche Motoren bevorzugt als Langsamläufer ausgebildet sind. Sofern zwischen dem Rotor und dem zugeordneten Endabtrieb und zwischen dem Stator und dem zugeordneten Endabtrieb jeweils ein Untersetzungsgetriebe angeordnet ist, kann der hydraulische Motor als Schnellläufer ausgebildet sein. Diese Anordnung eignet sich vor allem bei Verwendung eines Axialkolbenmotors, der in der Regel mit hohen Drehzahlen betrieben wird.

Zweckmäßigerweise ist dabei das Umkehrgetriebe in eines der Untersetzungsgetriebe integriert.

Es erweist sich ferner eine Ausgestaltung der Erfindung als günstig, bei der der Motor, das Umkehrgetriebe und ggf. die Untersetzungsgetriebe baulich zu einer Fahrzeug-Antriebsachse zusammengefasst sind.

Der erfindungsgemäße Fahrantrieb eignet sich besonders für die Verwendung in einem Flurförderzeug.

Weitere Vorteile und Einzelheiten der Erfindung werden anhand eines in der schematischen Figur dargestellten Ausführungsbeispieles näher erläutert.

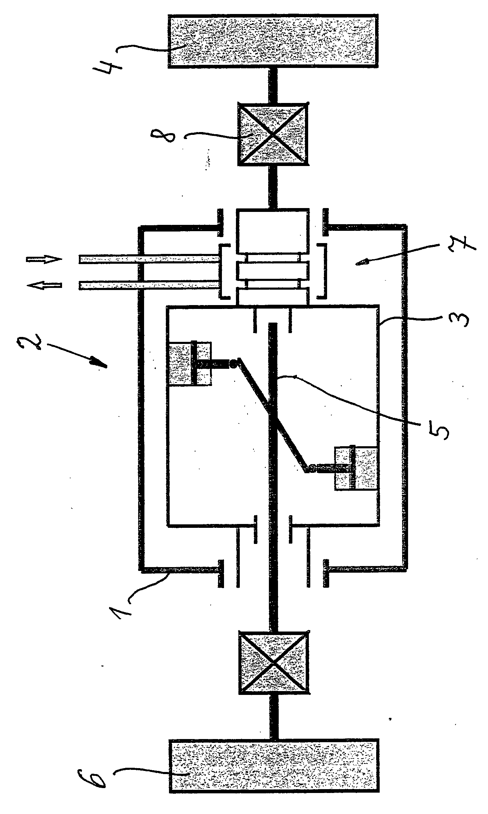

Der erfindungsgemäße Fahrantrieb ist im vorliegenden Ausführungsbeispiel als Fahrzeug-Antriebsachse ausgebildet. In einem fest stehenden Gehäuse 1 eines hydraulischen Motors 2 befindet sich ein darin drehbar gelagerter Stator 3. Dieser ist mit einem Endabtrieb 4 gekoppelt, der von einem in der Figur rechten Antriebsrad gebildet wird. In dem Stator 3 ist ein Rotor 5 drehbar gelagert, der mit einem Endabtrieb 6 gekoppelt ist. Der Endabtrieb 6 wird von einem in der Figur linken Antriebsrad gebildet.

Der hydraulische Motor 2 ist bevorzugt als hydrostatischer Kolbenmotor, beispielsweise als Axial- oder Radialkolbenmotor ausgebildet. Durch unter Druck stehendes Hydrauliköl, das dem hydraulischen Motor 2 durch eine geeignete Ölübertragungseinrichtung 7 (z. B. ringförmige Kammem im Gehäuse 1 und/oder im Stator 3) zugeführt wird und dort auch wieder abgeführt wird, entsteht ein auf den Rotor 5 einwirkendes Drehmoment und ein dazu gegensinnig gerichtetes Drehmoment, das auf den Stator 3 einwirkt.

Um dieselbe Drehrichtung der Endabtriebe 4 und 6 zu erhalten, ist zwischen den Stator 3 und den Endabtrieb 4 ein Umkehrgetriebe 8 geschaltet. Der erfindungsgemäße Fahrantrieb benötigt zum Drehzahlausgleich zwischen den Endabtrieben 4 und 6 kein separates Differenzialgetriebe, da durch die besondere Ausbildung des hydraulischen Motors 2 bereits in diesem eine Differenzialwirkung erzielbar ist.

Je nach Drehzahlbereich, in dem der hydraulische Motor 2 betrieben wird, kann in das Umkehrgetriebe 8 ein Untersetzungsgetriebe integriert sein kann. Sofern ein solches Untersetzungsgetriebe Verwendung findet, wird folglich auch zwischen dem Rotor 5 und dem Endabtrieb 6 ein Untersetzungsgetriebe angeordnet. Die Getriebe können auch in das Gehäuse 1 des hydraulischen Motors 2 integriert werden.

## Patentansprüche

1. Fahrantrieb mit mindestens einem hydraulischen Motor, der einen relativ zu einem Stator drehbar gelagerten Rotor aufweist, und mit einer Mehrzahl von Endabtrieben, **dadurch gekennzeichnet, dass** der Stator (3) in einem feststehenden Gehäuse (1) zum Rotor (5) entgegengesetzt drehbar gelagert ist, der Rotor (5) und der Stator (3) jeweils mit einem Endabtrieb (4; 6) in Antriebsverbindung stehen und ein Umkehrgetriebe (8) vorgesehen ist, das zwischen dem Rotor (5) und dem zugeordneten Endabtrieb (6) oder zwischen dem Stator (3) und dem zugeordneten Endabtrieb (4) angeordnet ist.

2. Fahrantrieb nach Anspruch 1, **dadurch gekennzeichnet, dass** der Motor (2) als hydrostatischer Kolbenmotor ausgebildet ist.

3. Fahrantrieb nach Anspruch 1 oder 2, **dadurch gekennzeichnet, dass** zwischen dem Rotor (5) und dem zugeordneten Endabtrieb (6) und zwischen dem Stator (3) und dem zugeordneten Endabtrieb (4) jeweils ein Untersetzungsgetriebe angeordnet ist.

4. Fahrantrieb nach Anspruch 3, **dadurch gekennzeichnet, dass** das Umkehrgetriebe (8) in eines der Untersetzungsgetriebe integriert ist.

5. Fahrantrieb nach einem der Ansprüche 1 bis 4 **dadurch gekennzeichnet, dass** der Motor (2), das Umkehrgetriebe (8) und ggf. die Untersetzungsgetriebe baulich zu einer Fahrzeug-Antriebsachse zusammengefasst sind.

6. Fahrantrieb nach einem der Ansprüche 1 bis 5 **gekennzeichnet durch** die Verwendung in einem Flurförderzeug.
